(19) **Europäisches Patentamt / European Patent Office / Office européen des brevets**

(11) **EP 4 273 641 A1**

(12) **EUROPEAN PATENT APPLICATION**

(43) Date of publication:
08.11.2023 Bulletin 2023/45

(21) Application number: 23170581.5

(22) Date of filing: 28.04.2023

(51) International Patent Classification (IPC):
**G05B 19/402** (2006.01) **B23Q 1/03** (2006.01)
**B23Q 3/06** (2006.01)

(52) Cooperative Patent Classification (CPC):
**G05B 19/402; B23Q 1/035; B23Q 1/037; B23Q 3/06; B23Q 3/088;** G05B 2219/35314;
G05B 2219/35316; G05B 2219/45174;
G05B 2219/49129; G05B 2219/49136;
G05B 2219/50125

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 05.05.2022 IT 202200009215

(71) Applicant: **SCM Group S.p.A.**
**47921 Rimini (RN) (IT)**

(72) Inventors:
- **MUCCIOLI, Gianluca**
**47921 RIMINI (RN) (IT)**
- **IANNUCCI, Federico**
**47921 RIMINI (RN) (IT)**

(74) Representative: **Tiburzi, Andrea et al**
**Barzanò & Zanardo Roma S.p.A.**
**Via Piemonte 26**
**00187 Roma (IT)**

(54) **METHOD FOR DETERMINING THE TOLERANCES FOR PLACING COUPLING DEVICES AND WORKING CENTER IMPLEMENTING SUCH METHOD**

(57) The present invention relates to a method of positioning (300) coupling devices (12) on a support plane (1) that develops along a first direction (X) and a second direction (Y), perpendicular to said first direction (X), of a working center (4) for machining on a workpiece, such as a panel (P), wherein said working center (4) comprises at least one machining tool (2), such as a cutter, a blade, a drill or the like, and wherein each coupling device (12) comprises a resting portion (1212, 1222).

The present invention also relates to a working center (4) for machining pieces or panels (P) made of wood, plastic, fiberglass and the like.

Fig. 1

## Description

The present invention relates to a method for determining the tolerances for placing coupling devices and working center implementing such method.

## Field of invention

More specifically, the invention relates to a method for positioning coupling devices for panels made of wood, plastic, fiberglass, and the like, on a support surface, of the type typically used in working centers, designed and manufactured in particular to allow faster reconfiguration of the arrangement of the coupling devices between one machining and another, managing the positioning tolerances of the coupling devices.

In the following, the description will be directed to the configuration of support planes for working centers for wooden panels, but it is clear that the same should not be considered limited to this specific use.

## Prior art

As is well known, there are currently working centers for machining panels. The machining carried out using these working centers include, by way of example, the cutting, milling, or drilling of panels. To carry out these processes it is generally necessary to arrange the panels on a work surface and lock them in position.

To make a working center easily adaptable to the various machining requirements, the support planes are generally constituted by a plurality of bars, movable in one direction, generally the advancement direction of the piece to be machined. In this way, the bars can be moved closer or further apart as needed.

Furthermore, the bar top comprises a plurality of devices coupling elements, such as suction cups or clamps, slidingly movable along said bars, so that they can be moved towards or away from each other, to create different configurations for blocking panels even of different sizes.

The bars are provided with ducts for feeding the vacuum, necessary to block the pieces on the suction cups.

In general, up to six suction cups or clamps can be mounted on each bar of a bar table, which can be removed and then repositioned freely, as mentioned, on the basis of the machining to be performed on the piece to be machined, according to different arrangements.

Both the bars and the suction cups can be positioned manually along the base of the working center. In this case, it is necessary for an operator to exactly position the bars and the suction cups on the bars to carry out the required machining.

Generally, between one machining operation and another, both the bars and the coupling devices need to be moved. In particular, the operation of repositioning the coupling devices requires a lot of time and many moving operations, in addition to the removal and in addition of coupling devices on the same bar.

In particular, with reference to the positioning of the coupling devices, it is necessary to ensure that there are no collisions with the machining tools, or with other moving mechanical elements of the machine, such as the machining head, tool magazines on the edge of a crosspiece, on which the machining head is installed, etc..

Consider, by way of example, the case of a panel arranged on a surface with bars and held in position by means of a certain number of coupling devices, in particular suction cups, according to a certain arrangement, in which said suction cups are arranged on several bars. Consider also the case in which a machining on the surface of the piece must be carried out on a first portion of the panel, therefore not through, using for example an end mill, while a pass-through machining must be carried out on a second portion of the panel, always using the same end mill.

It is evident that the suction cups arranged below the second portion of the panel must be positioned with a lower tolerance (namely, greater precision) than those of the first portion because a pass-through machining is envisaged in said second portion.

Currently, in a similar circumstance the positioning of both the suction cups arranged below the first and the second portion takes place considering the minimum tolerance of the suction cup, which presents the greatest risk of collision with a working tool. Evidently, this implies that even the cups that require greater tolerance will be placed with the same (reduced) tolerance of the cup with the greater risk of collision than all the others, which, as mentioned, will be less than that actually required.

In general, the lower the positioning tolerance required (i.e., the higher the positioning accuracy required), the greater the time required for an operator to carry out the positioning operation. In fact, each coupling device is equipped with positioning means, capable of interfacing with the bar on which they are slidably installed, to detect the relative position of the positioning device itself on the bar with respect to a position reference, and with a digital display, operatively connected to positioning means, on which an operator can read the actual position of the coupling device. When it is necessary to position a coupling device, the operator moves it on the bar, and detects the deviation of the position, which is generally not visible in real-time.

If the deviation between the actual position and the desired one is greater than the allowed tolerance, the operator moves, in one direction or in the opposite direction, the coupling device, to read the new position, and so on, iteratively, until the deviation is below the allowed minimum tolerance to avoid collisions between the coupling device and the machining tool during the panel machining steps.

As it can be seen, the smaller the tolerance required, the more average iterations an operator will need to perform to properly position a coupling device.

Therefore, the need is felt in the sector to reduce the number of movements of the coupling devices when positioning them on a bar, or more generally on a support plane.

## Scope of the invention

In light of the above, it is, therefore, an object of the present invention to propose a method capable of overcoming the limits of the calculation criteria of the positioning tolerance of the coupling devices arranged on a support plane.

A further object of the present invention is to implement this method in a working center for working panels, in particular wooden panels.

## Object of the invention

It is therefore a specific object of the present invention a method for placing coupling devices as defined in claim 1.

Therefore, a working center as defined in claim 11 also forms a specific object of the present invention.

Preferred embodiments are defined in the dependent claims.

## Brief description of the figures

The present invention will be now described, for illustrative but not limitative purposes, according to its preferred embodiments, with particular reference to the figures of the enclosed drawings, wherein:

figure 1 shows a top view of a diagram of a support plane, in particular, a bar plane according to the present invention, referring to a working center for machining wooden panels;

figure 2 shows a perspective view of some coupling devices in the bar plane of figure 1;

figure 3 shows a perspective view of a coupling device in the bar plane of figure 1 ;

figure 4 schematically shows the discretization principle of a support plane;

figure 5 shows the result of the representation of a support plane, which presents the arrangement of the support devices, the panels, and the machining surface of the machining tool;

figure 6 shows the outcome of the representation of a layout plan presenting the arrangement of the support devices, the panels, and the machining surface of the machining tool;

figure 7 shows a flowchart of the method for determining tolerances for the positioning of coupling devices according to the present invention; and

figure 8 shows a schematic top view of a working center for machining panels.

## Detailed description

In the various figures, similar parts will be indicated with the same reference numbers.

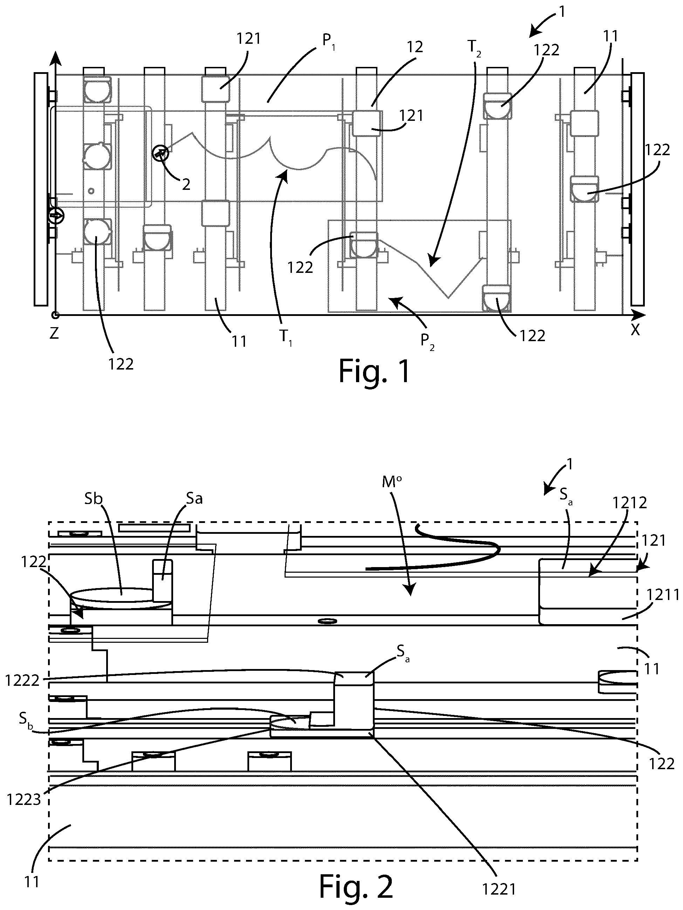

With reference to figure 1, a support plane 1 of the type normally used in a working center for wooden panels can be observed. In the embodiment shown, the support plane 1 is a bar plane. In other embodiments, the support plane 1 can be a multifunctional surface. By multifunctional plane we mean a continuous plane used for workings that do not pass through in the vertical direction, provided with openings or holes, through which a vacuum system acts in one or more specific portions of the multifunctional plane itself, delimited by gaskets. Should it be necessary to carry out through machining, support devices 12 will be mounted on this multifunctional plane, such as suction cups, which will be fixed to the surface by means of the vacuum present in the openings of the multifunctional surface, which will ensure both the fixing of the support device 12 to the surface, and the fixing of the piece to be worked on the support device 12.

For simplicity, the points of the support plane 1 can be referred to on the basis of a Cartesian plane shown in figure 1 itself, considering the orthogonal axes X and Y. The perpendicular axis Z to the plane identified by the X and Y axes forms, together with the latter, a reference Cartesian triad.

The support plane 1 of the embodiment shown in figure 1 comprises a plurality (six in the example) of support bars 11, arranged parallel to each other along the Y axis and movable along the X axis. In other embodiments, a different number of support bars 11 can be provided.

In the following, the tolerances will be determined with respect to the movement axis Y of the support devices 12. However, specifically, if said coupling devices 12 also had another degree of freedom precisely on the X-Y plane, the same operating principle would apply.

The support plane 1 also comprises a plurality of coupling devices 12, for coupling or gripping panels P, which in the present case are wooden panels, but which can also be of different materials.

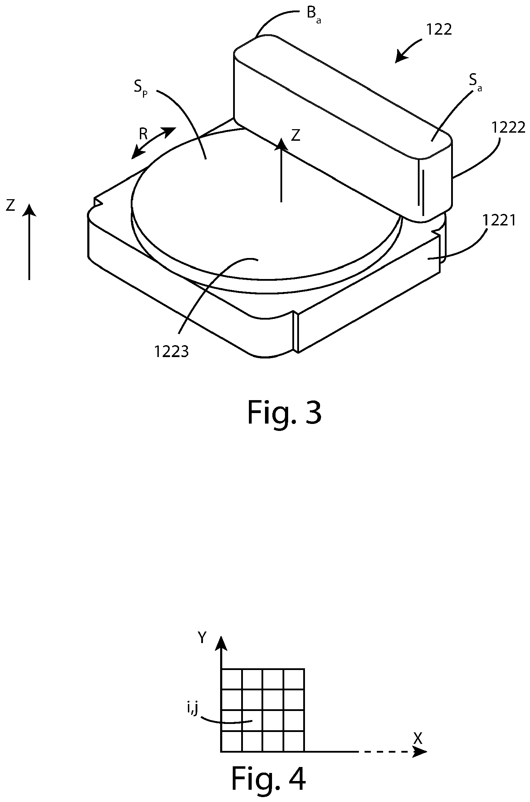

Each coupling device 12 is arranged on a support bar 11 and is slidably movable along it. Consequently, with respect to the aforementioned triad of Cartesian axes of figure 1, said coupling devices 12 are movable parallel to the Y axis. One or more coupling devices 12 can be arranged on each support bar 11. Furthermore, the coupling devices 12 can be of different types. In particular, also referring to figures 2 and 3, flat suction cups 121 and angular suction cups 122 can be observed. In other embodiments, further coupling devices 12 may be provided, such as pliers, clamps, and the like.

The flat suction cups 121 comprise a support base 1211, slidingly coupled to a respective support bar 11, and a resting portion 1212, arranged above said support base 1211, which is intended to support the panel to be worked. The resting portion 1212 has a support surface at the top, indicated with $S_a$, with which the panel P to be supported comes into contact. This support surface $S_a$ on the panel P has a perimeter, which is indicated with $B_a$.

In some embodiments, the support base 1211 and the resting portion 1212 can also be integrated or made in one piece.

Between the respective support bar 11 and the support base 1211 there is a fluid-dynamic connection for the vacuum, to allow said flat suction cup to hold in position the panel P possibly resting on it.

The angular suction cups 122 comprise a support base 1221, also slidingly coupled to a respective support bar 11, and having a vacuum connection with the respective support bar 11, to which it is coupled, and a resting portion 1212, having, as can be seen, a support surface always indicated with $S_a$ (with perimeter $B_a$). In this case, it is clear that the support surface $S_a$ of the resting portion 1212 is much smaller (as the respective perimeter $B_a$ is) than that of the flat suction cup 121. Each angular suction cup 122 also comprises a rotation plate 1223, interposed between the support base 1221 and the resting portion 1212.

The rotation plate 1223 is fixed to the resting portion 1212. Furthermore, the rotation plate 1223 is rotatably coupled to the support base 1221, to allow the rotation of the same, and therefore of the resting portion 1212, according to the direction indicated with the double arrow R. In this way, it is possible to orient the support surface $S_a$ of the resting portion 1212 according to the machining requirements.

As can be seen, between the support surface $S_a$ of the support portion 1222 and the upper surface of the rotation plate 1223, indicated in figure 3 with $S_p$, there is the distance indicated with $H_a$, which is the minimum distance, for the angular suction cup 122 always shown in figure 3, between the two aforementioned surfaces. Since the support surface $S_a$ of the resting portion 1222 and the upper surface $S_p$ of the rotation plate 1223 are parallel, such distance $H_a$ is perpendicular to both said surfaces.

The support surfaces $S_a$ of said support portions 1212 and/or 1222 of the support devices 12 identify a surface on which the panels P to be worked can rest and is called support plane $M^0$. As will also be better defined hereinafter, the arrangement of the support devices 12 can change according to the shape of the panel P to be worked, or the type of work to be carried out. In general terms, the support plane $M^0$ it is not changed and remains the same.

In reference to the above, the distance $H_a$ is the minimum distance, for a respective coupling device 12, between the support plane $M^0$ and the rest of the body of the coupling device 12 underlying said support plane $M^0$.

Going back to figure 1, it can be observed that on the support plane $M^0$ there are two panels to be worked, indicated with P1 and P2. Two trajectories are drawn on each of the two panels, respectively indicated with $T_1$ and $T_2$. These are the trajectories of a tool 2 that has to carry out a specific machining on said panels P1 and P2.

The workings of the machining tool 2 (e.g. a milling cutter, a blade, a drill bit, or the like) can, however, reach different depths.

Therefore the trajectories $T_i$ of the i-th panel to be machined can generally be characterized by two aspects or characteristics:

- the locus of the points of the trajectory of the machining tool 12 on the support plane 1, which has been indicated with $T_i$; and
- the depth of the machining to be carried out.

With respect to this second aspect, it must be considered that the workings on the panels P can be of different types. Surface millings can occur, which therefore only affect the upper surface of panel P, and which therefore do not affect (i.e., do not intersect) the support plane $M^0$, on which the panel P is arranged. In this case, there is no risk that a working tool 2 collides with a support device 12, with which the panel is coupled by the vacuum. There will therefore be a need for positioning of the coupling devices 12 with greater tolerance, i.e. with lower precision. In this case, said support devices 12 can be positioned faster, with a smaller number of iterations.

Then there can be through milling and/or drilling, in which the machining tool 2 passes through the panel P, and, therefore, intersects the support plane $M^0$. In this second case, the safety limit of the movement of the machining tool 2 is not identified in relation to the dimensions projected onto the support plane $M^0$, but on those below a lower plane parallel to the support plane $M^0$, here conventionally referred to as the overall encumbrance plane $M'$, on which the projections of the portions of the coupling devices 12 are collected below said encumbrance plane $M'$ itself. Said encumbrance plane $M'$, as mentioned, is the one parallel to the support plane $M^0$, passing through the point identified by the distance $H_a$ of the minor support devices (or group of them), excluding the resting portion 1212, 1222, i.e. the support surface $S_a$, otherwise the latter would obviously be at the minimum distance from the support plane $M^0$ and this last plane and the encumbrance plane $M'$ would coincide.

In an alternative embodiment, a respective encumbrance plane $M'_j$ can be defined for each coupling device 12, such that the tolerances calculated, as defined below, will refer to said plane, for the specific coupling device 12.

By way of example, with reference to figure 2 or 3, the point or bulk element of said support devices 12 closest to said support plane M° could be the surface of the rotation plate 1223 of the angle suction cup 122.

As mentioned, in general terms, the distance between the support plane $M^0$ and the encumbrance

plane $M'$ is the least of the distances $H_a$ of each coupling device 12, obviously excluding the flat suction cups 121.

When the workings are through, the support devices 12 must evidently be positioned with less tolerance, i.e. greater precision, to limit the risk of collisions.

Based on the above, in order to limit collisions between a machining tool 2 and the support devices 12, it is proceeded in general terms as follows.

Preliminarily, the support plane $M^0$ is discretized, i.e., divided into squares or cells (see figure 4), as already described above, thus obtaining the support plane collision matrix $M_{ij}^0$, where each "discrete" point or cell is indexed with a row index $i$ and a column index $j$, as shown in the aforementioned figure 4.

A similar operation is carried out for the encumbrance plane $M'$, obtaining the of the lower plane collision matrix $M_{ij}'$.

The encumbrance plane $M'$ is identified by determining, as mentioned, the minimum distance value indicated with $H_a$ of each support device 12.

The support plane $M^0$ and the encumbrance plane $M'$ are parallel and overlapping and the cells of the support plane collision matrix $M_{ij}^0$ are one-to-one coincident with the cells of the lower plane collision matrix $M_{ij}'$.

The one $ij$ of the support plane collision matrix $M_{ij}^0$ and of the collision matrix of the lower plane collision matrix $M_{ij}'$ they are generally of the same size, but they can also have different sizes. In a preferred embodiment, each cell $ij$ of said matrices represents a real space of the square X-Y plane with sides of 1 mm. In other embodiments, different measures may be provided.

Subsequently, values are assigned to the cells $ij$ of the support plane collision matrix $M_{ij}^0$ to determine the position on the support plane of the support devices 12 and in particular of the points of the perimeter $B_a$ of the support surface $S_a$ of the support portions 1212 and 1222 of the coupling devices 12, of the panel P, and of the trajectory $T_i$ of the i-th machining tool, distinguishing whether it is a surface or a through machining.

In particular, in the cells of the support plane collision matrix $M_{ij}^0$ it is attributed, for example:

- the value "1" for the cells identified by the orthogonal projection on the support plane $M^0$ of the support surface $S_a$, which has a perimeter $B_a$ and from the projection always on said support surface $M^0$ of the

edge of the panel/s P;
- the value "-1" for the points through which the machining tool passes; and
- the value "0" to unoccupied cells.

This allows for creating and storing a mapping of the support plane $M^0$.

A similar mapping operation is carried out on the encumbrance plane $M'$, which is, as mentioned, identified as the parallel plane and subjected to the supporting plane $M^0$, spaced from it by distance $H_a$ determined as the minimum value between said support plane $M^0$ and the first bulk element of the various support devices 12, or of a group of them relating to a certain area of the flat support plane 1.

On the encumbrance plane $M'$ the mapping of the underlying dimensions of the coupling devices 12 takes place, detecting on said plane the orthogonal projections of the remaining part of the body of the support devices 12. Of these orthogonal projections, in particular, the perimeter points are indicated with $B_b$.

Subsequently, taking into account the position of the coupling devices 12 (which, in any case, also takes into account the possible rotated position of each coupling device 12), their overall dimensions both on the support surface $M^0$, both on the encumbrance plane $M'$ of the trajectories $T_i$ of the various machining tools 2 and, above all, of the type of machining to be carried out (i.e. passing or non-passing), it is possible to determine the tolerance allowed for the positioning on the bars 11, i.e. along Y, of the various support devices 12.

This is done by calculating the distance along the line parallel to the Y axis (i.e. along the support bar 12) between each point of the perimeter $B_a$ of the support surface $S_a$ of the support portions 1212 and 1222 of the various coupling devices 12, and the points through which the tool 2 passes. According to the orientation of the point of the perimeter $B_a$ you will have a distance along the the upper Y $Y'_u$ or lower $Y'_i$ axis.

A similar operation is carried out on the encumbrance plane $M'$, starting now from the perimeter points $B_b$, calculating the distance along the line parallel to the Y axis (i.e. along the support bar 12) between each point of the perimeter $B_b$ of the aforementioned projections, and the points through which the machining tool 2 passes, which in this case are the machining points 2 where the tool only performs through machining (on $M^0$ both surface and through machining are considered).

Therefore, according to the orientation of the perimeter point $B_b$ of each projection defined above referred to each coupling device, there will be a higher distance along the upper $Y''_u$ or lower $Y''_i$ Y-axis. The tolerance is determined by considering the minimum of the deviations calculated on the support plane $M^0$ and the encumbrance plane $M'$, i.e. the minima between the pair $Y'_u$ and $Y''_u$ and the pair $Y'_i$ and $Y''_i$.

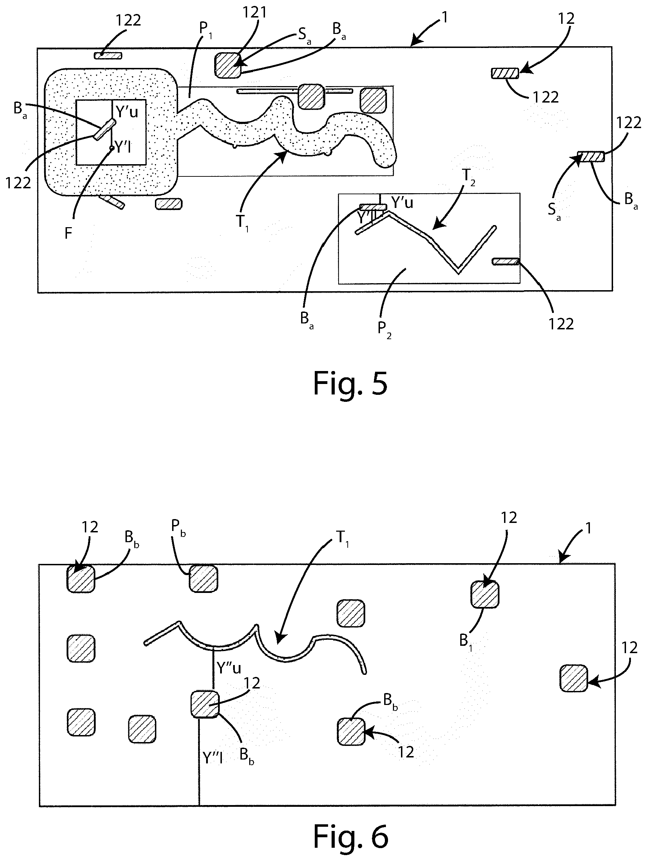

To better understand the operation of the solution, reference can be made to figures 5 and 6, which show, respectively, the outcome of the mapping of the support plane $M^0$ where the cells are distinguished $ij$, which indicate the occupation of a support device 12 (surfaces with a diagonal line) or the perimeter of the panels P1 and P2, the cells $ij$ over which the tool passes, which are indicated with a dotted line, the cells $ij$ unoccupied, which have no stretch.

As can be seen, in the support plane $M^0$ it can be observed how the tool machining area (dotted surface) includes a hole F, part of the perimeter of P1, around the trajectory $T_1$ and the trajectory $T_2$.

In the encumbrance plane $M'$ only part of the trajectory can be clearly seen $T_1$, which indicates that in these points the machining tool 2 carries out a through machining.

One has, of course, at the level of the support plane $M^0$ a machining surface (or passage of the working tool) greater than that of the encumbrance plane $M'$.

The figures also show graphically the representations of the distances from a point of the perimeter $B_a$ (figure 5) of the support surface $S_a$ of a portion of support portions 1222 of an angular suction cup 122, i.e. $Y'_u$ and $Y'_i$, and from a point on the perimeter $B_b$ (figure 6) of the overall orthogonal projection of a support device 12, i.e. $Y''_u$ e $Y''_i$. The distances are measured along lines parallel to the Y axis, i.e., along the support bars 11 of the support plane 1.

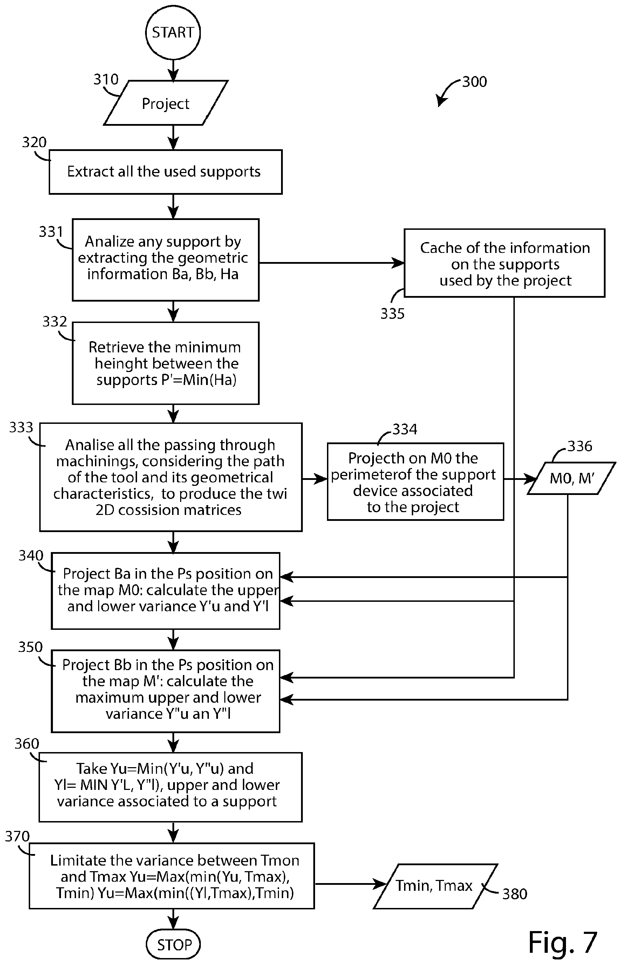

Referring now to figure 7, a flowchart can be seen of an embodiment of an algorithm for realizing, by means of a processor, such as a programmable computer, such as a CPU, an FPGA, or the like, the method of determining the tolerances for placement of coupling devices 12.

In particular, the method in the present case is indicated with the reference numeral 300 and comprises various steps and sub-steps.

In particular, the method 300 comprises an acquisition step of the machining project 310, in which the trajectories of the machining tools 2 are acquired, as well as whether they are through or not, and the position of the panels P; and a support acquisition phase 320, in which the arrangement of the support bars 11 is acquired, and therefore of the blocking devices 12 mounted on them, as well as the type and orientation of said blocking devices 12.

Subsequently, there is the planes mapping step 330, in which the support plane $M^0$ and the encumbrance plane $M'$ are mapped, respectively obtaining the support plane collision matrix $M_{ij}^0$ and the lower plane collision matrix $M_{ij}'$ for the processes and trajectories acquired in the acquisition step 310.

In particular, with regard to the mapping step 330, sub-steps are provided for analyzing 331 each support device 12 by extracting the geometric information for each support device 12 relating to the minimum height $H_a$ from the support plane $M^0$, the perimeter $B_a$ (two-dimensional) of the orthogonal projections on the support plane M° of each support surface $S_a$ of the support devices 12, and the perimeter $B_b$ (two-dimensional) of the orthogonal projection on the encumbrance plane $M'$ of the overall encumbrance of each support device 12. There is also the minimum height or distance $H_a$ determining step 332 the between the support plane $M^0$ and the first encumbrance of the different support devices 12.

Finally, there is the analysis step 333 of all the pass-thorough machining of a project considering the path of the machining tool 2 and its geometric characteristics for the calculation of the support plane collision matrix $M_{ij}^0$ and of the lower plane collision matrix $M_{ij}'$, projecting in step 334 the perimeter of the support devices 12 associated with the project. In the memorization steps 335 and 336 the geometric information of the support devices 12 and the support plane collision matrix $M_{ij}^0$ and the lower plane collision matrix $M_{ij}'$ are respectively memorized in a cache or in specific memories. 7u

In the deviations calculating step 360, the minimum between $Y'_u$ and $Y''_u$, as well as the minimum between $Y'_i$ and $Y''_i$, i.e. the minimum upper and lower deviation of each projection of the overall dimensions of each support device 12, on the support $M^0$ and encumbrances $M'$ planes are determined.

Finally, in deviation step 370, i.e. the tolerance, between $T_{min}$ and $T_{max}$ is limited, obtaining the maximum deviations, as calculated below:

$$Y_u = Max(Min(Y_u, T_{max}), T_{min})$$

$$Y_i = Max(Min(Y_i, T_{max}), T_{min})$$

It is also possible to provide step 380, in which the tolerances $T_{min}$ and $T_{max}$ can, for certain particular cases, be given from the external.

The generated commands can generally be displayed on a monitor or viewer, so that they can be seen by an operator.

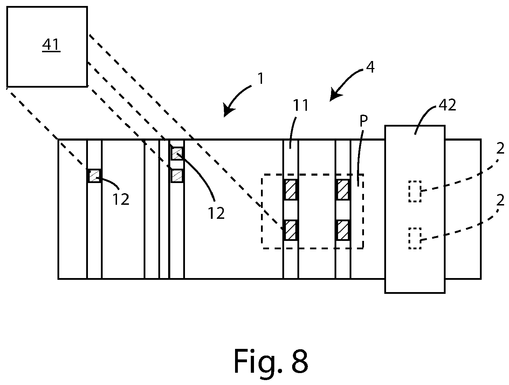

With reference to figure 8, a working center 4 can be schematically seen, having the support plane 1, with the relative bars 11 and the coupling devices 12. The working center 4 also comprises a bridge 42, on which any machining heads are installed, for the handling and the control of machining tools 2 schematically shown in figure 8.

The working center 4 also comprises a central control unit 41, functionally connected to said coupling devices 12.

The central control unit 41 is equipped with programmable processing means, such as a CPU, an FPGA or the like, for executing a program, which can reproduce the algorithm underlying the method for determining the tolerances for positioning the coupling devices.

## Advantages

An advantage of the present invention is that of decreasing the average positioning time of the coupling devices on the support bars of a bar surface, or more generally of a support surface.

A further advantage of the present invention is that of intuitively displaying the positioning indications of the support devices for an operator on a monitor.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method of positioning (300) coupling devices (12) on a support plane (1) that develops along a first direction (X) and a second direction (Y), perpendicular to said first direction (X), of a working center (4) for machining on a workpiece, such as a panel (P), wherein said working center (4) comprises at least one machining tool (2), such as a cutter, a blade, a drill or the like, and wherein each coupling device (12) comprises a resting portion (1212, 1222),
said method (300) comprising the following steps:

   acquiring (310) a machining process, including the trajectories of the machining tools (2) and the types of machining;
   acquiring the arrangement (320) of said locking devices (12) and of the type and/or orientation of said locking devices (12);
   identifying (330) a support plane ($M^0$), wherein said support plane ($M^0$) is the one on which the panel (P) is supported by said support devices (12),
   determining (340) on said support plane ($M^0$) the perimeter ($B_a$) of the projections of said resting portions (1212, 1222) of said coupling devices (12);
   calculating (360), along said first direction (X) and/or along said second direction (Y), the upper and lower distances ($Y'_u$, $Y'_i$) between each point of said perimeter ($B_a$) of the projections of said resting portions (1212, 1222) of each of said coupling devices (12) and the points where the tool (2) passes, projected on said support plane ($M^0$), and calculating (370), along the first direction (X) and/or the second direction (Y) of each coupling device (12), the movement tolerance based on the calculated higher distances ($Y'_u$, $Y''_u$) on the support plane ($M^0$) and of the lower distances ($Y'_i$, $Y''_i$) calculated higher on the support plane ($M^0$).

2. Positioning method (300) according to the preceding claim, **characterized**

   **in that** said identification step (330) comprises the sub-step of identifying an encumbrance plane ($M'$), wherein said encumbrance plane ($M'$) is arranged below and parallel to the support plane ($M^0$) at a distance ($H_a$),
   **in that** said determination step (340) comprises the sub-step of determining (350) on said lower level of the encumbrance plane ($M'$) the perimeter ($B_b$) of the orthogonal projections of the overall dimensions of each support device (12),
   **in that** said calculation step (360) includes the sub-step of calculating (360) along said first direction (X) and/or along said second direction (Y), the upper and lower distances ($Y''_u$, $Y''_i$) between each point of said perimeter ($B_b$) of the orthogonal projections of the overall encumbrance of each support device (12) and the points where the tool (2) passes projected on said encumbrance plane ($M'$), and calculating (370) along the first direction (X) and/or the second direction (Y) of each coupling device (12) the movement tolerance by determining the minimum value between the higher calculated distances ($Y'_u$, $Y''_u$) on the support surface ($M^0$) and on the encumbrance plane ($M'$), and between the lower distances ($Y'_i$, $Y''_i$) calculated higher on the support surface ($M^0$) and in terms of encumbrance plane ($M'$).

3. Method (300) according to any one of the preceding claims, **characterized**

   **in that** coupling devices (12) are slidingly coupled along at least one bar (11), which is in turn slidable on said support plane (1), and
   **in that** said acquisition step (320) comprises the acquisition of the position of said at least one support bar (11).

4. Method (300) according to any one of the preceding claims, **characterized**

   **in that** said identification step (330) comprises the determination of a support plane collision matrix ( $M_{ij}^0$ ) for the discretization in cells of the support plane ($M^0$), wherein each cell ($ij$) corresponds to an area of the surface of said support plane ($M^0$), and

**in that** with the attribution of values to the components of said support plane collision matrix ( $M_{ij}^0$ ) there are distinctly identified on said support plane ($M^0$) the perimeter ($B_a$), the points where the tool (2), projected onto said support plane ($M^0$), the edge of the panels (P) to be machined, the unoccupied areas of the support plane (1).

5. Method (300) according to any one of claims 2-4, **characterized**

in that said identification step (300) comprises the determination of a lower plane collision matrix ( $M_{ij}'$ ) for the discretization in cells of the encumbrance plane ($M'$), wherein each cell corresponds to an area of the surface of said encumbrance plane ($M'$), and
**in that** with the attribution of values to the components of said lower plane collision matrix ( $M_{ij}'$ ) there are distinctly identified, on said lower plane collision matrix ( $M_{ij}'$ ), the perimeter ($B_b$) of the orthogonal projections of the overall dimensions of each support device (12), the points on which the machining tool (2) passes, projected on said encumbrance plane ($M'$), the edge of the panels (P) to be machined, the areas of the support plane (1) not occupied.

6. Method (300) according to any one of claims 4 and 5, **characterized in that** said cells are squared and equal, and **in that** the measurement of the side of said cells is 1 millimeter.

7. Method (300) according to any one of claims 2-6, **characterized in that** said distance ($H_a$) is the minimum of the distances at which the body of said coupling devices (12), or of a group of them, from said encumbrance plane ($M'$), excluding the resting portion (1212, 1222).

8. Method (300) according to any one of the preceding claims, **characterized in that** said coupling devices (12) comprise suction cups and/or clamps.

9. Method (300) according to the preceding claim, **characterized in that** said suction cups (12) comprise:

a flat suction cup (121), having

a support base (1211), which can be slidingly coupled with a respective support bar (11), and
a support portion (1212) arranged above said support base (1211), which is intended to support the panel (P) to be machined, and having a support surface ($S_a$) which defines said first perimeter ($B_a$) of said flat suction cup on said supporting surface ($M^0$); and/or

an angular suction cup (122), having

a support base (1221), which can be slidingly coupled with a respective support bar (11) and
a support portion (1212), having a support surface ($S_a$), which defines said first perimeter ($B_a$) of said angular suction cup (122) on said support plane ($M^0$),
a rotation plate (1223) for coupling in rotation said support base (1221) and said support portion (1212),
wherein between said support surface ($S_a$) of the support portion (1222) and the upper surface ($S_p$) of the rotation plate (1223), there is a distance ($H_a$), which is the minimum distance between said surfaces.

10. Method (300) according to any one of the preceding claims, **characterized in that** it comprises the further step of displaying the tolerance commands on a fixed and/or mobile display device.

11. Method (300) according to any one of the preceding claims, **characterized in that** said types of working can be through workings, such that said working tool passes through said support surface ($M^0$), or not through workings.

12. Working center (4) for machining pieces or panels (P) made of wood, plastic, fiberglass and the like, comprising

a support plane (1) consisting of a plurality of support bars (11),
wherein on each support bar (11) a plurality of coupling devices (12) that are slidingly arranged, for coupling a piece or panel (P) to be machined,
a central control unit (41), operatively connected to each of said coupling devices (12) and to said support bars (11) for detecting the relative position of the coupling devices arranged on each support bar (11),
**characterized in that** the central control unit (41) is configured to perform the steps of the positioning method (300) according to any one of claims 1-11 and generating the position tolerance indications for the arrangement of the coupling devices (12).

13. Working center according to the preceding claim, **characterized in that** said coupling devices (12) are suction cups or clamps.

14. Working center according to any one of claims 12 or 13, **characterized in that** said support bars (11) of said support plane (1) are movable.

15. A computer program comprising instructions which, when the program is executed by a computer, cause the computer to execute the positioning tolerance determination method (300) according to any one of claims 1-11.

16. A computer readable storage medium comprising instructions which, when executed by a computer, cause the computer to execute the steps of the positioning tolerance determination method (300) according to any one of claims 1-11.

Fig. 1

Fig. 2

Fig. 3

Fig. 4

Fig. 5

Fig. 6

START

310 Project

300

320 Extract all the used supports

331 Analize any support by
extracting the geometric
information Ba, Bb, Ha

Cache of the information
on the supports
used by the project

335

332 Retrieve the minimum
heinght between the
supports P'=Min(Ha)

333 Analise all the passing through
machinings, considering the path
of the tool and its geometrical
characteristics, to produce the twi
2D cossision matrices

334 Projecth on M0 the
perimeterof the support
device associated
to the project

336 M0, M'

340 Project Ba in the Ps position on
the map M0: calculate the upper
and lower variance Y'u and Y'l

350 Project Bb in the Ps position on
the map M': calculate the
maximum upper and lower
variance Y"u an Y"l

360 Take Yu=Min(Y'u, Y"u) and
Yl= MIN Y'L, Y"l), upper and lower
variance associated to a support

370 Limitate the variance between Tmon
and Tmax Yu=Max(min(Yu, Tmax),
Tmin) Yu=Max(min((Yl,Tmax),Tmin)

Tmin, Tmax 380

STOP

Fig. 7

Fig. 8

Europäisches
Patentamt

European
Patent Office

Office européen
des brevets

## EUROPEAN SEARCH REPORT

Application Number

EP 23 17 0581

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 992 993 B1 (HOMAG GMBH [DE]) 23 October 2019 (2019-10-23) * paragraph [0008] - paragraph [0023] * * paragraph [0036] - paragraph [0040] * * paragraph [0047] - paragraph [0054] * * paragraph [0057] - paragraph [0073] * * paragraph [0081] * * figures 5-6 *  ───── | 1-16 | INV. G05B19/402 B23Q1/03 B23Q3/06 |
|  |  |  | TECHNICAL FIELDS SEARCHED (IPC) |
|  |  |  | G05B B23Q |

The present search report has been drawn up for all claims

| Place of search | Date of completion of the search | Examiner |
|---|---|---|
| The Hague | 25 August 2023 | Orobitg Oriola, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 17 0581

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2023

| Patent document cited in search report | | Publication date | Patent family member(s) | Publication date |
|---|---|---|---|---|
| EP 2992993 | B1 | 23-10-2019 | DE 102014012957 A1 | 10-03-2016 |
| | | | EP 2992993 A1 | 09-03-2016 |
| | | | ES 2757275 T3 | 28-04-2020 |
| | | | PL 2992993 T3 | 28-02-2020 |

EPO FORM P0459

For more details about this annex : see Official Journal of the European Patent Office, No. 12/82